# EUROPEAN PATENT APPLICATION

(11) **EP 1 132 426 A2**
(43) Date of publication of application: **12.09.2001**
(21) Application number: 01112000.3
(22) Date of filing: 27.02.1997
(51) Int. Cl.: C08K 5/00, C08L 23/02, B32B 27/32

(54) **Laminated film comprising a polyolefin resin composition**

(30) Priority: 29.02.1996 JP 4370696
(62) Divisional of application: 97103239.6
(71) Applicant: Sumitomo Chemical Company, Limited, Chuo-ku Osaka 541-8550 (JP)
(72) Inventor: The designation of the inventor has not yet been filed
(74) Representative: VOSSIUS & PARTNER

(57) **Abstract**

A fluorescent composite containing 100 wt. parts of a shielding agent and 0.005 to 10 wt. parts of a fluorescent substance provides a polyolefin resin composition and laminated film which maintain light quality-modifying properties of the fluorescent substance for a long time, and suppress the discoloration of the fluorescent substance under outdoor exposure conditions, and the laminated film is advantageously used as an agricultural film.

## Description

The present invention relates to a polyolefin resin composition containing a fluorescent substance, and a laminated film comprising a layer comprising said resin composition or a layer containing a fluorescent substance.

Polyvinyl chloride films and polyolefin resin films (e.g. polyethylene films, ethylene-vinyl acetate copolymer films, etc) have been mainly used as agricultural films for setting up green houses, tunnels and curtains in horticulture and gardening. In particular, polyvinyl chloride films are widely used as agricultural films.

With the rise of public opinions on the global environment protection, polyolefin resin films which can be completely burnt without generating hazardous gases attract more attention than polyvinyl chloride films which generate hydrogen chloride gas when their waste is burnt, and polyolefin resin films such as the above described polyethylene films and ethylene-vinyl acetate copolymer films have been used in place of the polyvinyl chloride films in the horticulture.

A purpose of the horticulture in the facilities is to enable planting and growing of crops in a season when outdoor raising is impossible or to increase productivity of the crops in a season when the productivity descreases by artificially controlling a raising atmosphere for the crops to create a suitable atmosphere for the crops. Thus, it is necessary to create a production atmosphere by finding relationships of atmospheric conditions (e.g. amounts of light, temperature, humidity, concentrations of carbon dioxide, amounts of water, kinds of soil, and so on) with growing properties of the crops by taking economical efficiency into account.

Properties required for a covering material which is essential to create an artificial space, that is, a facility vary with objects of its use, applications, and also the kind of crop. For example, main properties required for a covering film which is used as a covering material for the green houses or tunnels or insulation curtains used in the houses or tunnels include weather resistance (the property to withstand outdoor use with exposure to sunlight for a long time), anti-sticking property ( the property of preventing deterioration of transparency which is caused by covering of an inner surface of the film with water droplets formed by condensation because of high humidity in the house or tunnel), a heat retaining property ( the property of keeping a high temperature in the facility at night), light transmission or transparency, and the like.

In recent years, a technique for artificially modifying a wavelength spectrum or intensity of light has been found, that is, the light quality modification has effects on yield increase of crops through increase of photosynthesis, change of flower color through control of synthesis of coloring materials, improvement of appearances of products, prevention of crop damage due to diseases, for example, prevention and extermination of harmful insects and suppression of growth of germs, and the like.

In particular, the light quality modification technique using sunlight as a light source includes a method for shielding UV rays in a specific wavelength range with a UV ray absorber (see JP-A-52-43637, JP-A-52-98125, JP-A-53-75039, JP-A-53-27539, JP-A-53-98242, etc.), a method for changing the light in a shorter wavelength range to that in a longer wavelength range with a fluorescent substance (see JP-B-46-24376, JP-A-50-89147, etc.) and the like.

In these years, the latter method has been intensively studied because of the increase of a quantum yield of fluorescent luminescence of the fluorescent substance. JP-A-58-71832, JP-A-62-209172 (corresponding to US-A-4486587 and EP-B-073 007), JP-A-62-148571 (corresponding to US-A-4845223 and EP-B-227 980), JP-A-4-131023, JP-A-6-40817 and JP-A-6-41524 disclose methods for increasing photosynthesis by the modification of visible light to longer wavelength light, and JP-A-3-198721, JP-A-3-72818, JP-A-4-141025, JP-A-6-46684, JP-A-6-46685 and JP-A-6-38635 (corresponding to EP-A-579 835) disclose methods for accelerating the growth of plants by modifying the light in the UV wavelength range to that in the longer wavelength range.

However, films comprising the polyolefin resins in which the above fluorescent substance has been compounded are easily discolored when they are used outdoors, for example, in agriculture. Thus, their properties for maintaining the light quality modification ability for a long time (durability of the light quality modification ability) are not satisfactory.

An object of the present invention is to provide a polyolefin resin composition for providing a film which can modify the light quality and has good durability, that is, good weather resistance, and properties for maintaining transparency and light quality modification ability.

Another object of the present invention is to provide a polyolefin resin film which is friendly to the global environment, excellent in durability, that is, weather resistance, and properties for maintaining transparency and light quality modification ability, can be used as a covering film or an insulation curtain in a horticultural houses or tunnels and also as a multing film.

According to the first aspect, the present invention provides a polyolefin resin composition comprising a polyolefin resin and a fluorescent composite which comprises 100 wt. parts of a shielding agent and 0.005 to 10 wt. parts of a fluorescent substance.

According to the second aspect, the present invention provides a laminated film comprising at least one layer which comprises the polyolefin resin composition of the present invention.

According to the third aspect, the present invention provides a laminated film comprising at least one layer which comprises a polyolefin resin and at least one layer which comprises a fluorescent composite of 100 wt. parts of a shielding agent and 0.005 to 10 wt. parts of a fluorescent substance.

The fluorescent substances include those absorbing visible light and converting it to longer wavelength light and those absorbing UV rays and converting them to longer wavelength light. Either of these two types of fluorescent substances can be used in the present invention.

Examples of the fluorescent substances are violanthrone type, isoviolanthrone type, pyranthrone type, perylene type, thioxanthene type, coumarine type, benzopyran type, naphthalimide or naphtolactam type, benzopteridine, type, pyrazine type, cyanopyrazine, stilbene type, diaminodiphenyl type, imidazole type, imidazolone type, triazole type, thiazole type, oxazole type, carbostyryl type, pyrazoline type, dihydropyridine type compounds, and the like.

Specific fluorescent substances are disclosed in JP-A-62-209172 (corresponding to US-A-4486587 and EP-B-073 007 the disclosures of which are hereby incorporated by reference), JP-A-62-148571 (corresponding to US-A-4845223 and EP-B-227 980 the disclosures of which are hereby incorporated by reference), JP-A-4-131023, JP-A-6-40817, JP-A-6-41524, JP-A-3-198721, JP-A-3-72818, JP-A-4-141025, JP-A-6-46684, JP-A-6-46685 and JP-A-6-38635 (corresponding to EP-A-579 835 the disclosure of which are hereby incorporated by reference).

Concrete examples of the fluorescent substances are those represented by the following formulas (1) through (21):

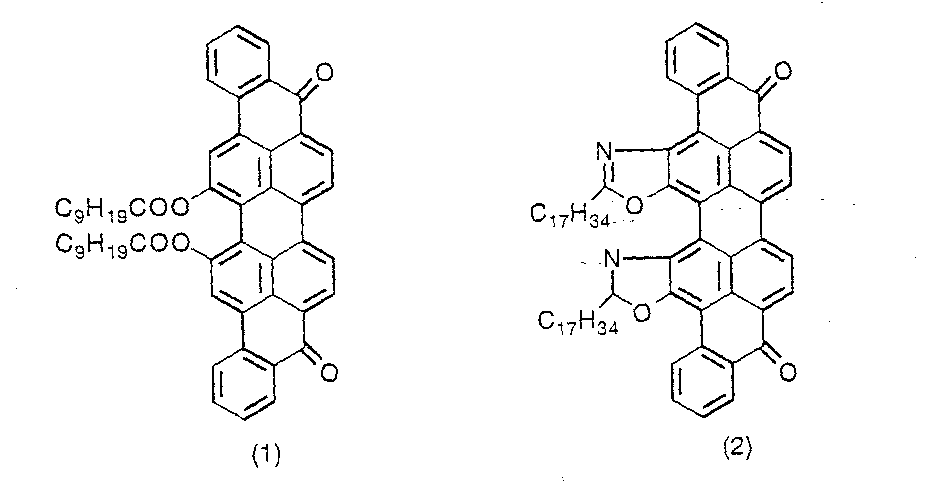

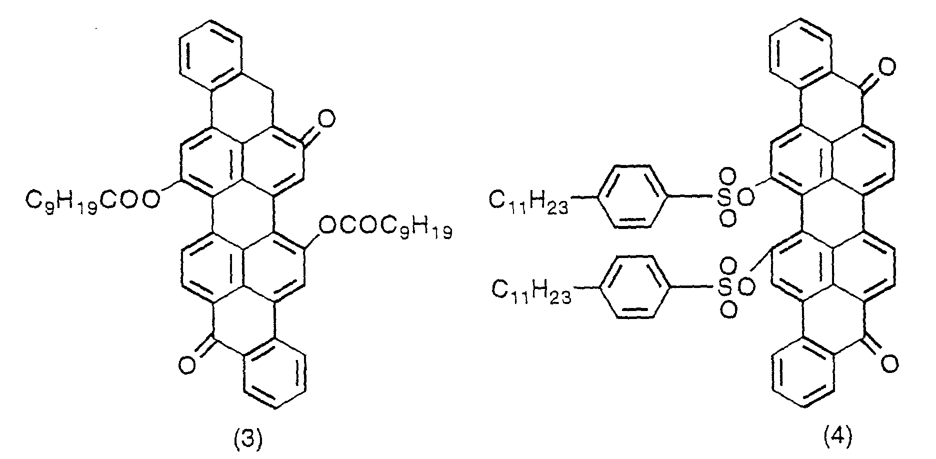

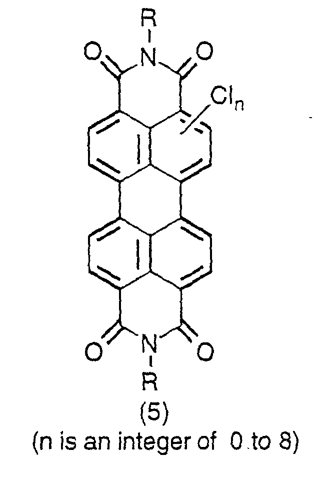

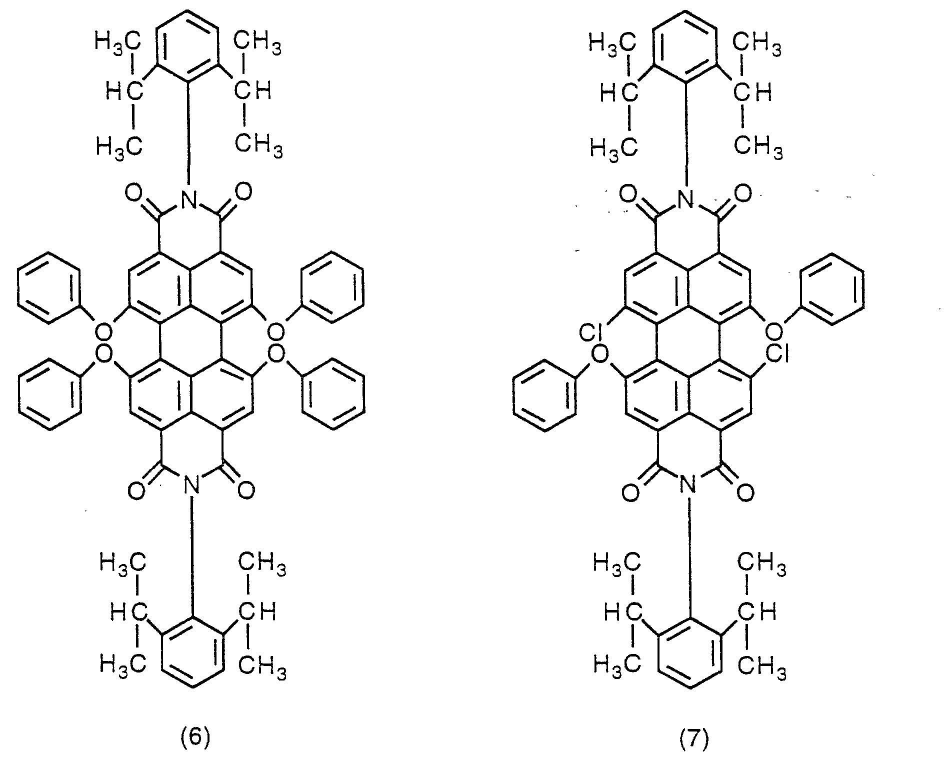

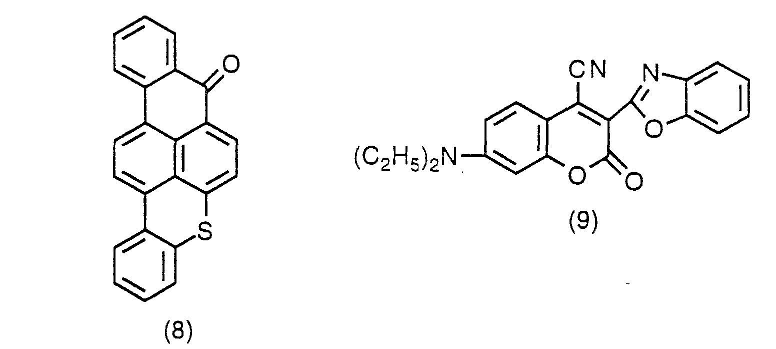

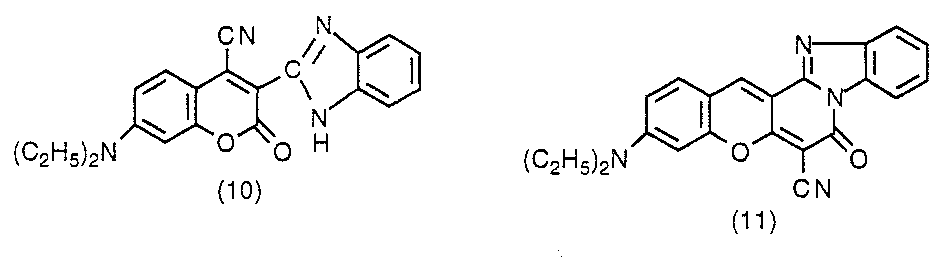

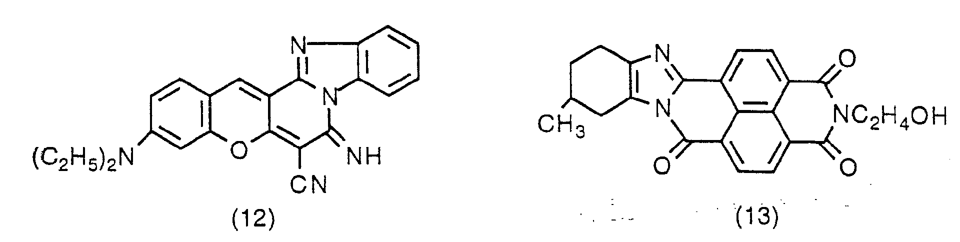

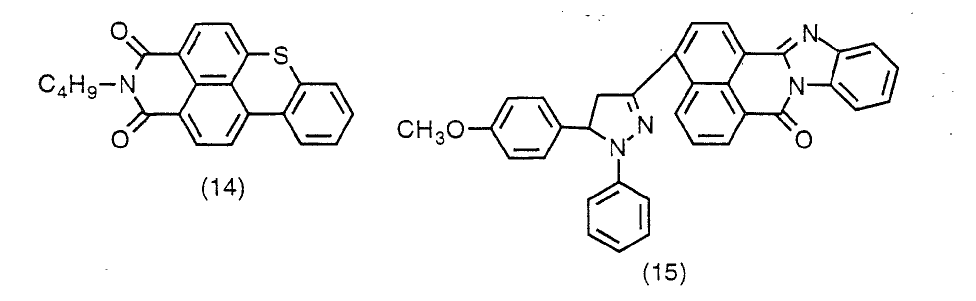

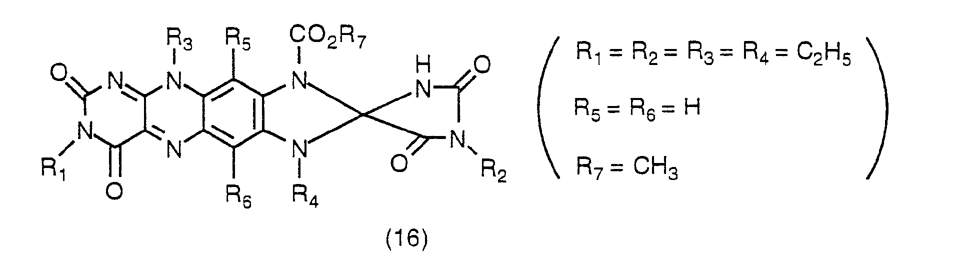

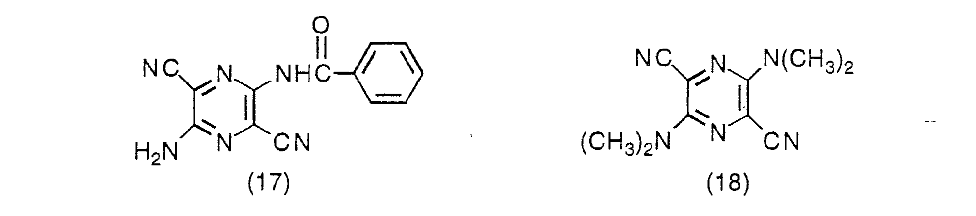

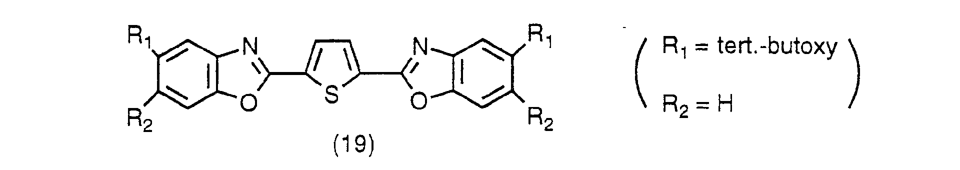

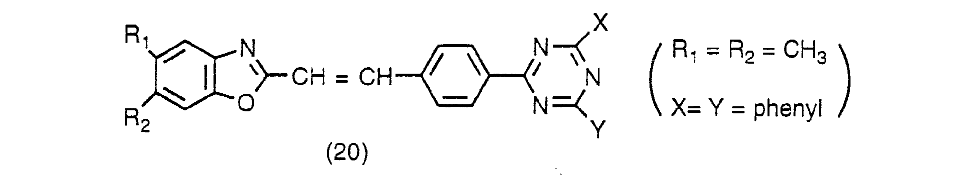

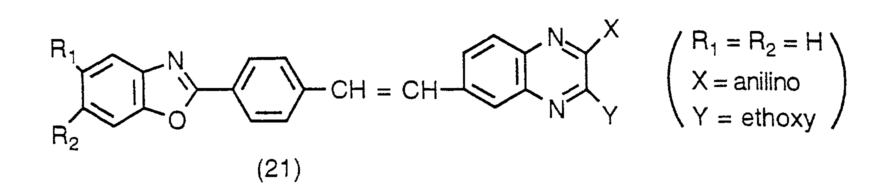

Among the above fluorescent substances, the perylene type compounds of the formulas (3) through (7) are preferable in view of the durability and dispersibility. In particular, the nonionic perylene type compounds such as those disclosed in JP-A-62-148571 (corresponding to US-A-4845223 and EP-B-227 980), for example the compounds of the above formulas (6) and (7) are preferable.

The content of the fluorescent substance in the fluorescent composite used in the present invention is between 0.005 and 10 wt. parts per 100 wt. parts of the shielding agent which will be explained below. When the content of the fluorescent substance is too low, the obtained resin composition and film have insufficient fluorescence intensity, while a too large content of the fluorescent substance is less economical. The content of the fluorescent substance is preferably at least 0.02 wt. part, more preferably at least 0.05 wt. part in view of the fluorescence intensity. The upper limit of the content of the fluorescent substance is preferably 5 wt. parts or less, more preferably 2 wt. parts or less from the economical point of view.

The shielding agents used in the present invention suppress the deactivation of the fluorescent substance which has been excited with light due to collision with other materials. Preferably, a shielding agent is used in which the fluorescent substance is homogeneously dispersed, in particular, almost to the mono molecule level.

Examples of the shielding agent are resins having a high glass transition temperature, inclusion compounds, layered compounds, and the like.

Specific examples of the resins having a high glass transition temperature are thermoplastic resins having a glass transition temperature of at least 23°C such as polymethyl methacrylate, polystyrene, polycarbonate, polyamide, polyvinyl alcohol, poly-4-methylpentene-1, polyphenylenoxide, polyvinylpyridine, etc. Among them, polymethyl methacrylate is preferable in view of the durability.

Examples of the inclusion compounds are natural zeolites (e.g. zeolite, faujasite, moldenite, chabazite, analcite, natrolite, harmotome, etc.) and synthetic zeolites having the similar structures to those of the above natural zeolites. Specific examples of the zeolites are described in "ZEOLITES" ed. by N. Hara and H. Takahashi (published by KABUSHIKIKAISHA KODANSHA in 1975). Examples of the organic inclusion compounds are cyclodextrin, cyclophane, kalixarene, etc.

Examples of the layered compounds are swellable clay minerals, hydrotalcite compounds containing interlayer anions, lithium aluminum double hydroxides, etc.

The clay minerals include two-layer types consisting of a tetrahedral layer of silica and an octahedral layer having a center metal atom such as aluminum or magnesium on the tetrahedron layer, and three-layer types consisting of two tetrahedral layers of silica and an octahedral layer having a center metal atom such as aluminum or magnesium which is interposed between the two tetrahedral layers.

Examples of the two-layer type clay minerals are kaolinites, antigorites, and the like, and examples of the three-layer type clay minerals are smectites, vermiculites, mica, and the like depending on the number of interlayer cations. Specific examples of the clay minerals are kaolinite, dickite, nacrite, halloysite, antigorite, chrisotile, pyrophylite, montmorillonite, hectorite, tetrasilicic mica, sodium taeniolite, muscovite, margarite, talc, vermiculite, phlogopite, xanthophyllite, chlorite, and the like.

An example of the hydrotalcite compound is a compound of the formula (I):

M²⁺ ₁₋ₓAlₓ(OH)₂(Aⁿ⁻)_{x/n}•mH₂O (I)

wherein M²⁺ is a divalent metal ion of a metal selected from the group consisting of magnesium, calcium and zinc, x is a number larger than 0 and smaller than 0.5, m is a number of 0 to 2, and Aⁿ⁻ is a n-valent anion.

The n-valent anion is not limited, and its preferred examples are Cl-, Br⁻, I⁻, NO₃⁻, ClO₄⁻, SO₄²⁻, CO₃²⁻, SiO₃²⁻, HPO₄³⁻, HBO₄³⁻, PO₄³⁻, Fe(CN)₆³⁻, Fe(CN)₆⁴⁻, CH₃COO⁻, C₆H₄(OH)COO⁻, (COO)₂²⁻, terephthalate ion, p-hydroxybenzoate ion, naphthalenesulfonate ion, etc.

Specific examples of the hydrotalcite compound are natural hydrotalcite (Mg_{0.75}Al_{0.25}(OH)₂(CO₃)_{0.125}•0.5H₂O), synthetic hydrotalcite (Mg_{0.69}Al_{0.31}(OH)₂(CO₃)_{0.15}•0.54H₂O. Trade name DHT-4A manufactured by KYOWA Chemical Industries, Ltd.), and so on.

An example of the lithium aluminum double hydroxide is a compound of the formula:

Li⁺(Al³⁺)₂(OH⁻)₆•(A₁ⁿ⁻)_{1/n}•kH₂O (1)

wherein A₁ⁿ⁻ is a n-valent anion, for example, Cl⁻, Br⁻, I⁻, NO₃⁻, ClO₄⁻ , SO₄²⁻, CO₃²⁻, SiO₃²⁻, HPO₄³⁻, HBO³⁻, PO₄³⁻, Fe(CN)₄³⁻, Fe(CN)₄⁴⁻, CH₃COO⁻, C₆H₄(OH)COO⁻, (COO)₂²⁻, terephthalate ion, p-hydroxybenzoate ion, naphthalenesulfonate ion, etc. and k is a number of 0 to 3. Its specific examples are MIZUKALAC (manufactured by Mizusawa Chemical Industries, Ltd.), FUJIRAIN LS (manufactured by Fuji Chemical Industries, Ltd.), and the like. In addition, analogous compounds to the above double hydroxides which further contain at least one element selected from alkaline earth elements, Zn and Si (e.g. LMA manufactured by Fuji Chemical Industries, Ltd.) can be exemplified.

The characteristic of the present invention resides in the use of the fluorescent composite which has been obtained by compounding the fluorescent substance and the shielding agent.

The fluorescent substance and shielding agent may be compounded by any conventional method which can disperse the fluorescent substance in the obtained fluorescent composite homogeneously, for example, mixing of the fluorescent substance and shielding agent with a conventional mixer.

The following method is preferable in view of the maintenance of the light quality-modifying properties for a long time:
(1) when the resin having high glass transition temperature is used as the shielding agent, the fluorescent substance and the resin are mixed in a solvent in which the fluorescent substance is dissolved and the shielding agent is dissolved or swelled, and a liquid in which the fluorescent substance is dissolved and the shielding agente is dissolved or swelled.
(2) when the inclusion compound or layered compound is used as the shielding agent, the fluorescent substance is dissolved in a solvent and then the inclusion compound or layered compound is dispersed in the solution.

The fluorescent composite comprising the resin as the shielding agent and the fluorescent substance which is dispersed in the resin, or comprising the inclusion compound or layered compound and the fluorescent substance which is included or contained in the space of the inclusion compound or the interlayer space of the layered compound is recovered by removing the solvent from the above mixture. For example, the perylene compound as the fluorescent substance and polymethyl methacrylate as the shielding agent are dissolved in a specific amount of chloroform, and then chloroform is evaporated off. Thereby, a fluorescent composite is obtained.

The above mixture as such may be compounded in the polyolefin resin, and the solvent may be evaporated off during compounding. Alternatively, the above mixture is applied on a layer of polyolefin resin, and then the solvent is removed.

The fluorescent composite may contain various additives such as heat stabilizers, weathering agents, UV-ray absorbers, fillers, lubricants, colorants, and the like, as long as the objects of the present invention are not impaired.

The polyolefin resin composition of the present invention comprises a polyolefin resin and the above fluorescent composite.

The polyolefin resins to be used in the present invention include homo- or copolymers of ethylene and/or an α-olefin having 3 to 18 carbon atoms, and copolymers of ethylene or an α-olefin with other monomers. Among them, polyolefin resins having a glass transition temperature of less than 23°C are preferable. Examples of the polyolefin resins having a glass transition temperature of less than 23°C are homopolymers of ethylene or an α-olefin (e.g. polyethylene, polypropylene, etc.), ethylene-α-olefin copolymers (e.g. ethylene-propylene copolymers, ethylene-butene-1 copolymers, ethylene-4-methyl-1-pentene copolymers, ethylene-hexene copolymers, ethylene-octene copolymers, etc.), copolymers comprising ethylene or an α-olefin and other monomers (e.g. ethylene-vinyl acetate copolymers, ethylene-acrylic acid copolymers, ethylene-methyl methacrylate copolymers, ethylene-vinyl acetate-methyl methacrylate copolymers, ionomer resins, etc.), and the like.

Among these resins, low density polyethylene, ethylene-α-olefin copolymers, and ethylene-vinyl acetate copolymers containing 30 wt. % or less of vinyl acetate are preferable, since they have excellent transparency and flexibility, and can provide economical films.

The polyolefin resin may contain a heat retaining agent for improving the heat retaining properties of the film. Examples of the heat retaining agent are disclosed in JP-A-52-105953, JP-B-4-11107 and JP-B-57-34871. Specific examples of the heat retaining agent are phosphates (e.g. lithium phosphate, sodium phosphate, potassium phosphate, calcium phosphate, etc.), metal oxides (e.g. magnesium oxide, calcium oxide, aluminum oxide, titanium oxide, silicon oxide, etc.), metal hydroxides (e.g. lithium hydroxide, magnesium hydroxide, calcium hydroxide, aluminum hydroxide, etc.), carbonates (e.g. magnesium carbonate, calcium carbonate, etc.), sulfates (e.g. potassium sulfate, magnesium sulfate, calcium sulfate, zinc sulfate, aluminum sulfate, etc.), silicates (e.g. magnesium silicate, calcium silicate, aluminum silicate, titanium silicate, etc.), aluminates (e.g. sodium aluminate, potassium aluminate, calcium aluminate, etc.), (anhydrous) aluminosilicates (e.g. sodium aluminosilicate, potassium aluminosilicate, etc.), dehydrated kaolinite, aluminum silicate, zeolite, kaolin, talk, clay, and the above hydrotalcite compounds, the above lithium aluminum double hydroxides, the analogous compounds to the lithium aluminum double hydroxides, and the like. The polyolefin resin may contain acetal resins.

Among the above heat retaining agents, the hydrotalcite compounds, the lithium aluminum double hydroxides and their analogous compounds are preferable since they improve the heat retaining properties of the film, and also the weather resistance and resistance to agrochemicals, in particular, inorganic sulfur agents.

The content of the heat retaining agent is usually between 0.1 and 25 wt. % based on the weight of the polyolefin resin, preferably between 1 and 10 wt. % in view of the heat retaining properties and transparency of the film.

The average particle size of the heat retaining agent is preferably 5 µm or less, more preferably between 0.05 and 2 µm in view of the transparency of the film.

The heat retaining agents may be surface treated with higher fatty acids or their alkali metal salts for improving their dispersibility in the polyolefin resin or film.

The polyolefin resin may contain one or more additives such as anti-sticking agents, heat stabilizers, weathering agents, UV-ray absorbers, filler, anti-fogging agents, lubricants, colorants, and the like, as long as the objects of the present invention are not impaired.

Examples of the weathering agent are hindered amine compounds, nickel compounds, and so on. In particular, the hindered amine compounds are preferably used because of their good properties. Specific examples of the hindered amine compound are 2,2,6,6-tetraalkylpiperidine derivatives which preferably have a molecular weight of 250 or more and a substituent at the 4-position. Examples of the substituent at the 4-position are carboxylic acid groups, alkoxy groups, alkylamino groups, and the like. The piperidine ring may have an alkyl group on the nitrogen atom. The hindered amines may be used independently or as a mixture thereof.

The amount of the weathering agent is between 0.02 and 5 wt. %, preferably between 0.1 and 2 wt. % based on the weight of the polyolefin resin.

The UV-ray absorbers may be commercially available ones, and include benzophenone compounds, benzotriazole compounds, benzoate compounds, cyanoacrylate compounds, and the like. The amount of the UV-ray absorber is usually between 0.01 and 3 wt. %, preferably between 0.05 and 1 wt. % based on the weight of the polyolefin resin. The UV-ray absorbers may be used independently or as a mixture thereof.

The anti-sticking agents include solid ones and liquid ones at ambient temperature (around 23°C). Examples of the solid anti-sticking agent are nonionic surfactants such as sorbitan fatty acid ester surfactants (e.g. sorbitan monostearate, sorbitan monopalmitate, etc.), glycerol fatty acid esters (e.g. glycerol monolaurate, glycerol monopalmitate, glycerol monostearate, diglycerol distearate, triglycerol monostearate, etc.), polyethylene glycol base surfactants (e.g. polyethylene glycol monopalmitate, polyethylene glycol monostearate, etc.), adducts of alkylphenols with alkylene oxides, esters of organic acids with sorbitan/glycerol condensates, and the like. Examples of the liquid anti-sticking agent are glycerol fatty acid esters (e.g. glycerol monooleate, diglycerol monooleate, diglycerol sesquioleate, tetraglycerol monooleate, hexaglycerol monooleate, hexaglycerol pentaoleate, tetraglycerol trioleate, tetraglycerol monolaurate, hexaglycerol monolaurate, etc.), sorbitan fatty acid esters (e.g. sorbitan monooleate, sorbitan dioleate, sorbitan trioleate, etc.), and the like. The solid and liquid anti-sticking agents are preferably used in combination in view of the effect for suppressing bleeding of the anti-sticking agents onto the film surface during storage, and the transparency of the film. The amount of the anti-sticking agent is not limited as long as the film properties are not deteriorated. In general, the amount of the anti-sticking agent is between 0.5 and 5 wt. %, preferably between 1.5 and 4 wt. % based on the weight of the polyolefin resin.

Examples of the anti-fogging agent are fluorine compounds having a perfluoroalkyl group, ω-hydrofluoroalkyl group, and the like, in particular, fluorine-containing surfactants (e.g. UNIDAIN DS-403, DS-406 and DS-401 available from DAIKIN INDUSTRIES, LTD.), silicon compounds having an alkylsiloxane group, in particular, silicon-containing surfactants, and the like. The amount of the anti-fogging agent is not limited as long as the film properties are not deteriorated. In general, the amount of the anti-fogging agent is between 0.01 and 1 wt. %, preferably between 0.05 and 0.5 wt. % based on the weight of the polyolefin resin.

Examples of the heat stabilizers are phenol compounds (e.g. 2,6-dialkylphenol derivatives, 2-alkylphenol derivatives, etc.), sulfur compounds having a thiol or thioether bond including a divalent sulfur atom, phosphite esters having a trivalent phosphorus atom, and the like.

Examples of the filler are magnesium oxide, calcium oxide, aluminum oxide, silicon oxide, titanium oxide, lithium hydroxide, magnesium hydroxide, calcium hydroxide, aluminum hydroxide, magnesium carbonate, calcium carbonate, potassium sulfate, magnesium sulfate, calcium sulfate, zinc sulfate, aluminum sulfate, lithium phosphate, sodium phosphate, potassium phosphate, calcium phosphate, magnesium silicate, calcium silicate, aluminum silicate, titanium silicate, sodium aluminate, potassium aluminate, calcium aluminate, sodium aluminosilicate, potassium aluminosilicate, calcium aluminosilicate, kaolin, talc, clay, and so on.

The fluorescent composite can be compounded in the polyolefin resin by any conventional method, for example, by heat kneading the fluorescent composite in the polyolefin resin, or by mixing the dispersion or solution of the fluorescent composite with the molten polyolefin resin and (heat) kneading them while removing the solvent.

The kneading can be carried out with a Banbury mixer, a single screw extruder, a twin screw extruder (the same or opposite rotation directions), a roll kneader, and the like.

The amount of the fluorescent composite in the polyolefin resin composition can be selected so that the content of the fluorescent substance in the resin composition will be in a specific range. The amount of the fluorescent composite is preferably 50 wt. parts or less, more preferably 10 wt. parts or less per 100 wt. parts of the polyolefin resin in view of the transparency of the film and the mechanical properties of the film such as strength. The amount of the fluorescent composite is preferably at least 0.01 wt. part, more preferably at least 0.1 wt. part per 100 wt. parts of the polyolefin resin in view of the fluorescence intensity of the film.

The content of the fluorescent substance in the resin composition depends on the kinds of the fluorescent substance, and is usually between 0.001 and 1 wt. part per 100 wt. parts of the polyolefin resin, and preferably between 0.005 and 0.1 wt. part, more preferably between 0.01 and 0.05 wt. part in view of the fluorescence intensity and costs of the obtained polyolefin resin composition.

The polyolefin resin film of the present invention is preferably used as an agricultural film such as a covering of a green house or tunnel used in the horticulture. In such case, the thickness of the film is usually in the range between 0.02 and 0.3 mm, preferably in the range between 0.03 and 0.2 mm in view of the strength of the film, easiness of joint-processing, and covering workability.

The resin film of the present invention may be a single layer film or a multilayer film comprising at least one layer of the polyolefin resin composition of the present invention and at least one layer of other resin. The multilayer film may be a two-kind three-layer film, three-kind three-layer film, three-kind five-layer film, four-kind five-layer film, five-kind five-layer film, and the like.

In the case of the multilayer film, the layer of other resin is usually a layer of a polyolefin resin which does not contain the fluorescent substance. Examples of the polyolefin resin are those exemplified above.

When the multilayer film is used as the agricultural film, the layer facing outside of the facility may be subjected to dust-resistant treatment, while the layer facing inside of the facility may be subjected to anti-sticking treatment and/or anti-fogging treatment. An intermediate layer may contain inorganic compounds for improving the heat retaining properties.

The film of the present invention may be produced as follows:

Specified amounts of the optional additives such as the anti-sticking agent, heat stabilizers, weathering agents, and the like are compounded in the polyolefin resin composition of the present invention with a conventional mixing and kneading apparatus such as a ribbon blender, a super mixer, a Banbury mixer, a single or twin screw extruder, and the like, and then molded by a conventional molding method such as extrusion T-die film molding, inflation film molding and the like. The multilayer film may be produced by coextrusion, melt coating, extrusion lamination, dry lamination methods, and the like.

If the adhesion strength between the layers of the multilayer film of the present invention is insufficient, a separate adhesive resin layer is preferably provided between them. Any adhesive resin may be used, as long as the layers are not delaminated in practical use. Preferable examples of the adhesive resins are modified olefin polymers having carboxyl groups prepared by chemically bonding an unsaturated carboxylic acid or its anhydride to olefin polymers such as polyolefins (e.g. polyethylene, polypropylene, polybutene, etc,) or copolymers comprising the olefin as the main component.

Specific examples of the adhesive resins are maleic anhydride-grafted modified polyethylene, maleic anhydride-grafted modified polypropylene, maleic anhydride-grafted modified ethylene-ethyl acrylate copolymers, maleic anhydride-grafted modified ethylene-vinyl acetate copolymers, ionomer resins, and the like. They may be used independently or as a mixture of two or more of them.

The laminated film comprising the layer of the fluorescent composite and the layer of the polyolefin resin may be produced by applying a mixture of the fluorescent substance and the shielding agent dissolved or dispersed in the solvent onto the film of the polyolefin resin by a conventional coating method such as gravure coating, dip coating, reverse gravure coating, reverse roll coating, three-roll reverse coating, die coating, spray coating, microgravure coating, knife coating, blade coating, mayer bar coating, air knife coating, and the like. When the shielding agent is the resin, the method described above for the producing of the multilayer film may be used.

The thickness of the fluorescent composite layer is usually between 0.01 and 50 µm, preferably between 0.05 and 10 µm, more preferably between 0.1 and 5 µm.

The layer of the fluorescent composite may contain a binder such as urethane resins, colloid-forming silica or metal oxides.

The laminated films of the present invention having a heat retaining index of at least 55 are preferably used as agricultural films such as the covering or curtain of the green houses or tunnels, since such the films have good heat retaining properties.

The heat retaining index herein used is a measure for expressing the heat retaining properties of the facilities such as the green houses, and is expressed by a ratio of a radiation absorbing energy by a film having a thickness of 75 µm to the black-body radiation absorbing energy (100 %) at the same temperature.

For example, the heat retaining index is measured as follows:

Transmittance in the wave-number range between 330 cm⁻¹ and 4400 cm⁻¹ is measured with an IR spectrophotometer (1640 Type FTIR manufactured by Perkin-Elmer), and a percentage of the absorbance by a film having a thickness of 75 µm in relation to the black-body absorption range at 27°C is calculated from the peak areas.

The heat retaining properties of the film increases and thus the heat retaining index increases as the absorption by the film increases.

The agricultural film preferably has a heat retaining index of at least 65, more preferably at least 70.

In one embodiment, an anti-sticking coating may be formed on at least one surface of the laminated film in addition to the compounding of the above liquid anti-sticking agent in the film for maintaining the transparency of the film according to the present invention for a long time. In the case of the agricultural covering film being used for green houses or tunnels, the anti-sticking coating is preferably formed on the surface facing towards the inside of the green houses or tunnels.

Examples of the anti-sticking coating are a coating film of an inorganic oxide sol such as colloidal silica and colloidal alumina disclosed in JP-B-49-32668 and JP-B-50-11348, a coating film of a mixture of such the inorganic oxide sol and an organic compound (e.g. a surfactant or a resin) disclosed in JP-B-63-45432, JP-B-63-45717 and JP-B-64-2158 and JP-A-3-207643, a coating film formed from a liquid comprising a surfactant, a film of a hydrophilic resin (e.g. polyvinyl alcohol, polysaccarides, polyacrylic acid, etc.), and the like.

The anti-sticking coating may be formed by coating the anti-sticking material, or laminating a separately formed film of the anti-sticking material on the polyolefin resin film. The coating method is not critical. Two or more anti-sticking coatings may be formed.

The polyolefin resin composition and the laminated film comprising the resin composition according to the present invention maintain the light quality-modifying properties of the fluorescent substance for a long time, and suppress the discoloration of the fluorescent substance under the outdoor exposure conditions.

The laminated films of the present invention are used as the agricultural materials such as the covering films for the green houses, tunnels and curtains for horticulture, and multing films, and increase the crop production.

### Examples

The present invention will be explained in detail by the following examples which will not limit the scope of the present invention in any way.

The fluorescence durability was tested in the Examples as follows:

A test piece was exposed in a Sunshine Weather-O-meter (manufactured by SUGA TEST INSTRUMENTS Co., Ltd.) at a black panel temperature of 83°C for 300 hours. Then, the change of fluorescent color before and after the exposure was visually evaluated and ranked according to the following criteria:
O: Substantially no change
Δ: Slight discoloration
X: Apparent discoloration

### Example 1

A 0.05 wt. % solution of a perylene compound (Trade name: LUMOGEN F Red 300) as a fluorescent substance in chloroform (100 ml) and a 1 wt. % solution of polymethyl methacrylate as a shielding agent in chloroform (100 ml) were mixed and cast on a glass plate, and a fluorescent composite film having a thickness of about 10 µm was obtained. Then it was pulverized with a ball mill. This composite will be referred to as Fluorescent Composite A. The weight ratio of the fluorescent substance to the shielding agent was 5:100.

Next, 0.6 wt. % of a hindered amine compound (A) as a weathering agent (Trade name: TINUVIN 622-LD manufactured by Ciba-Geigy), 8.0 wt. % of the hydrotalcite compound (Trade name: DHT-4A manufactured by Kyowa Chemical Industries, Ltd.), 0.1 wt. % of a UV-ray absorber (Trade name: SUMISORB 130 manufactured by Sumitomo Chemical Co., Ltd.), 0.1 wt. % of an antioxidant (I) (Trade name: IRGANOX 1010 manufactured by Ciba-Geigy), 1.4 wt. % of monoglycerol monostearate and 0.6 wt. % of diglycerol distearate as anti-fogging agents, 0.2 wt. % of stearic acid amide as a lubricant and 0.4 wt. % of the Fluorescent Composite A were added to an ethylene-vinyl acetate copolymer (Trade name: EVATATE H 2020 manufactured by Sumitomo Chemical Co., Ltd. vinyl acetate content: 15 wt. %) and kneaded with a Banbury mixer at 130°C for 5 minutes. Then, the mixture was pelletized by a pelletizer and pellets of the composition were obtained. This composition will be referred to as "Resin Composition (1)".

Separately, 0.6 wt. % of the hindered amine (A), 0.1 wt. % of a UV-ray absorber (Trade name: SUMISORB 130 manufactured by Sumitomo Chemical Co., Ltd.), 0.1 wt. % of the antioxidant (I), 1.4 wt. % of monoglycerol monostearate and 0.6 wt. % of diglycerol distearate, 0.2 wt. % of stearic acid amide and 0.4 wt. % of the Fluorescent Composite A were added to low density polyethylene (Trade name: SUMIKATHEN F208-0 manufactured by Sumitomo Chemical Co., Ltd.) and knead and pelletized in the same manner as in the production of the Resin Composition (1). This resin composition will be referred to as "Resin Composition (2)".

Using the Resin Composition (1) as a composition of an intermediate layer and the Resin Composition (2) as a composition of two outer layers, a laminated film having a thickness of 100 µm (a thickness of intermediate layer: 60 µm, a thickness of each outer layer: 20 µm) was prepared by an inflation film molding machine, and subjected to the fluorescence durability test. The result was "O".

### Example 2

0.3 wt. % of the hindered amine compound (A) (Trade name: TINUVIN 622-LD manufactured by Ciba-Geigy), 0.3 wt. % of a hindered amine compound (B) (trade name: CIMASORB 944-LD manufactured by Ciba-Geigy), 16.0 wt. % of a lithium aluminum double hydroxide (Trade name: MIZUKALAC manufactured by Mizusawa Chemical Industries, Ltd.), 0.5 wt. % of a UV-ray absorber (Trade name: SUMISORB 300 manufactured by Sumitomo Chemical Co., Ltd.), 0.1 wt. % of the antioxidant (I), 1.4 wt. % of sorbitan monostearate and 0.6 wt. % of diglycerol distearate as anti-fogging agents, 0.1 wt. % of a fluorine-containing surfactant (Trade name: UNIDAIN DS 403 manufactured by DAIKIN INDUSTRIES, LTD.) as an anti-fogging agent, 0.2 wt. % of stearic acid amide as a lubricant and 0.4 wt. % of the Fluorescent Composite A were added to an ethylene-vinyl acetate copolymer (Trade name: EVATATE H 2020 manufactured by Sumitomo Chemical Co., Ltd. vinyl acetate content: 15 wt. %) and kneaded with a Banbury mixer at 130°C for 5 minutes. Then, the mixture was pelletized by a pelletizer and pellets of the composition were obtained. This composition will be referred to as "Resin Composition (3)".

Separately, 0.4 wt. % of the hindered amine compound (B), 0.5 wt. % of the UV-ray absorber (Trade name: SUMISORB 300 manufactured by Sumitomo Chemical Co., Ltd.), 0.1 wt. % of the antioxidant (I), 1.4 wt. % of sorbitan monostearate, 0.6 wt. % of diglycerol distearate, 0.1 wt. % of the fluorine-containing surfactant (Trade name: UNIDAIN DS 403 manufactured by DAIKIN INDUSTRIES, LTD.), 0.2 wt. % of stearic acid amide and 0.4 wt. % of the Fluorescent Composite (A) were added to an ethylene-vinyl acetate copolymer (Trade name: EVATATE D 2011 manufactured by Sumitomo Chemical Co., Ltd. vinyl acetate content: 5 wt. %) and knead and pelletized in the same manner as in the production of the Resin Composition (3). This resin composition will be referred to as "Resin Composition (4)".

Using the Resin Composition (3) as a composition of an intermediate layer and the Resin Composition (4) as a composition of two outer layers, a laminated film having a thickness of 75 µm (a thickness of intermediate layer: 45 µm, a thickness of each outer layer: 15 µm) was prepared by an inflation film molding machine, and subjected to the fluorescence durability test. The result was "O".

### Example 3

A Fluorescent Composite (B) was prepared in the same manner as in Example 1 except that LUMOGEN F Orange 240 was used as a fluorescent substance.

Then, a laminated film was produced in the same manner as in Example 1 except that the Fluorescent Composite (B) was used in place of the Fluorescent Composite (A), and subjected to the fluorescence durability test. The result was "O".

### Example 4

A laminated film was produced in the same manner as in Example 2 except that the Fluorescent Campsite (B) was used in place of the Fluorescent Composite (A), and subjected to the fluorescence durability test. The result was "O".

### Example 5

A Fluorescent Composite (C) was prepared in the same manner as in Example 1 except that LUMOGEN F Yellow 083 was used as a fluorescent substance.

Then, a laminated film was produced in the same manner as in Example 1 except that the Fluorescent Composite (C) was used in place of the Fluorescent Composite (A), and subjected to the fluorescence durability test. The result was "O".

### Example 6

A Fluorescent Composite (D) was prepared in the same manner as in Example 1 except that LUMOGEN F Violet 570 was used as a fluorescent substance.

Then, a laminated film was produced in the same manner as in Example 1 except that the Fluorescent Composite (D) was used in place of the Fluorescent Composite (A), and subjected to the fluorescence durability test. The result was "O".

### Example 7

0.6 wt. % of the hindered amine compound (A), 16.0 wt. % of a lithium aluminum double hydroxide (Trade name: MIZUKALAC manufactured by Mizusawa Chemical Industries, Ltd.), 0.1 wt. % of a UV-ray absorber (Trade name: SUMISORB 130 manufactured by Sumitomo Chemical Co., Ltd.), 0.1 wt. % of the antioxidant (I) and 0.2 wt. % of stearic acid amide as a lubricant were added to an ethylene-vinyl acetate copolymer (Trade name: EVATATE H 2020 manufactured by Sumitomo Chemical Co., Ltd. vinyl acetate content: 15 wt. %) and kneaded with a Banbury mixer at 130°C for 5 minutes. Then, the mixture was pelletized by a pelletizer and pellets of the composition were obtained. This composition will be referred to as "Resin Composition (5)".

Separately, 0.6 wt. % of the hindered amine compound (A), 0.1 wt. % of the UV-ray absorber (Trade name: SUMISORB 130 manufactured by Sumitomo Chemical Co., Ltd.), 0.1 wt. % of the antioxidant (I) and 0.2 wt. % of stearic acid amide were added to an ethylene-vinyl acetate copolymer (Trade name: EVATATE D 2011 manufactured by Sumitomo Chemical Co., Ltd. vinyl acetate content: 5 wt. %) and knead and pelletized in the same manner as in the production of the Resin Composition (5). This resin composition will be referred to as "Resin Composition (6)".

Using the Resin Composition (5) as a composition of an intermediate layer and the Resin Composition (6) as a composition of two outer layers, a laminated film having a thickness of 100 µm (a thickness of intermediate layer: 60 µm, a thickness of each outer layer: 20 µm) was prepared by an inflation film molding machine.

A 0.005 wt. % solution of a perylene compound (Trade name: LUMOGEN F Red 300) as a fluorescent substance in chloroform (100 ml) and a 1 wt. % of polymethyl methacrylate (manufactured by NACALAI TESQUE) as a shielding agent in chloroform (100 ml) were mixed. The weight ratio of the fluorescent substance to the shielding agent was 0.5:100.

Then, the obtained mixture was coated at a thickness of 4 µm on the above prepared laminated film.

This coated film was subjected to the fluorescence durability test. The result was "O".

### Example 8

A coated film was produced in the same manner as in Example 7 except that LUMOGEN F Orange 240 was used, and subjected to the fluorescence durability test. The result was "O".

### Example 9

A coated film was produced in the same manner as in Example 7 except that LUMOGEN F Yellow 083 was used, and subjected to the fluorescence durability test. The result was "O".

### Example 10

A coated film was produced in the same manner as in Example 7 except that LUMOGEN F Violet 570 was used, and subjected to the fluorescence durability test. The result was "O".

### Comparative Example 1

A laminated film was produced in the same manner as in Example 1 except that no shielding agent was used, and subjected to the fluorescence durability test. The result was "X".

### Comparative Example 2

A laminated film was produced in the same manner as in Example 1 except that 0.4 wt. % of polymethyl methacrylate powder and 0.02 wt. % of LUMOGEN F Red 300 as a fluorescent substance were separately added in stead of the use of the Fluorescent Composite (A), and subjected to the fluorescence durability test. The result was "X".

### Comparative Example 3

A laminated film was produced in the same manner as in Example 1 except that 0.4 wt. % of polymethyl methacrylate powder and 0.02 wt. % of LUMOGEN F Orange 240 as a fluorescent substance were separately added in stead of the use of the Fluorescent Composite (A), and subjected to the fluorescence durability test. The result was "X".

### Comparative Example 4

A laminated film was produced in the same manner as in Example 1 except that 0.4 wt. % of polymethyl methacrylate powder and 0.02 wt. % of LUMOGEN F Yellow 083 as a fluorescent substance were separately added in stead of the use of the Fluorescent Composite (A), and subjected to the fluorescence durability test. The result was "X".

### Comparative Example 5

A laminated film was produced in the same manner as in Example 1 except that 0.4 wt. % of polymethyl methacrylate powder and 0.02 wt. % of LUMOGEN F Violet 570 as a fluorescent substance were separately added in stead of the use of the Fluorescent Composite (A), and subjected to the fluorescence durability test. The result was "X".

### Comparative Example 6

A laminated film was produced in the same manner as in Example 1 except that no shielding agent was used, and subjected to the fluorescence durability test. The result was "X".

## Claims

1. A laminated film comprising at least one layer which comprises a polyolefin resin composition comprising a polyolefin resin and a fluorescent composite which comprises 100 wt. parts of a resin having a glass transition temperature of at least 23°C as a shielding agent and 0.005 to 10 wt. parts of a fluorescent substance.

2. A laminated film according to claim 1, wherein the content of said fluorescent composite is between 0.01 and 50 wt. parts per 100 wt. parts of said polyolefin resin.

3. A laminated film according to claim 1 or 2, which further contains at least one additive selected from weathering agents, UV-ray absorbers, heat-retaining agents, anti-fogging agents, anti-sticking agents and heat stabilizers.

4. A laminated film comprising at least one layer which comprises a polyolefin resin and at least one layer which comprises a fluorescent composite of 100 wt. parts of a resin having a glass transition temperature of at least 23°C as a shielding agent and 0.005 to 10 wt. parts of a fluorescent substance.

5. A laminated film according to claim 4, wherein said at least one layer comprising said fluorescent composite is formed by coating said fluorescent composite on said polyolefin resin layer.

6. A laminated film according to any of claims 1 to 5, which has a heat retaining index of at least 55.

7. A laminated film according to claim 6, wherein the heat retaining index is at least 65.

8. A laminated film according to any of claims 1 to 7, which further comprises at least one anti-sticking layer as the outermost layer.
